(19)

Europäisches
Patentamt
European
Patent Office
Office européen
des brevets

(11) **EP 2 105 728 A1**

(12) **EUROPEAN PATENT APPLICATION**

(43) Date of publication:
**30.09.2009 Bulletin 2009/40**

(51) Int Cl.:
*G01N 27/12* (2006.01)  *G01N 27/16* (2006.01)
*G01N 27/18* (2006.01)  *G08B 17/117* (2006.01)

(21) Application number: 08153392.9

(22) Date of filing: **27.03.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Consultatie Implementatie Technisch
Beheer B.V.
7201 JB Zutphen (NL)**

(72) Inventor: **Bos, Albert
6971 AN, Brummen (NL)**

(74) Representative: **Hatzmann, Martin
Vereenigde
Johan de Wittlaan 7
2517 JR Den Haag (NL)**

(54) **Detector comprising one catalysed and one uncatalysed metal oxide-sensor and method of
detecting**

(57)     A detector is described for providing an output
signal (Sout) indicative for the presence of scorch in an
environment. The detector comprises first and a second
sensor (10, 20) for sensing the presence of gaseous sub-
stances and a signal processor (30). The first and the
second sensor (10, 20) sense the presence of gaseous
substances based on a reversible chemical reaction between a metal-oxide component of the sensor and said
substances that results in an observable change in an
electrical property of said component. The metal-oxide
gas sensitive component of the first gas sensor (10) is
uncatalyzed and the metal-oxide gas sensitive component of the second gas sensor (20) is catalyzed. The
signal processor (30) provides an output signal as a function of a first sense signal (S1_1) indicative for the physical parameter of the first sensor (10) and of a second
sense signal (S2_1) indicative for the physical parameter
of the second sensor (20).

Figure 2

**Description**

BACKGROUND

Field of the invention

The present invention relates to a detector for detecting scorch in an environment.
The invention further relates to a method for detecting scorch in an environment.

Description of related art

Detectors are known that are capable of detecting smoke resulting of a fire. Upon detection of the smoke, the fire may be extinguished automatically. Extinguishing a fire, however, may result in damages comparable to the damage caused by fire itself. It is therefore highly desirable to eliminate a potential cause before it has actually resulted in a fire.
Numerous materials have been reported to be usable as metal oxide sensors including both single- (e.g., ZnO, SnO2, W03, TiO2, and Fe2O3) and multi-component oxides (BiFeO3, MgAl2O4, SrTi03, and $Sr_{1-y}Ca_yFeO3_{-x}$). The mechanism for gas detection in these materials is based, in large part, on reactions that occur at the sensor surface, resulting in a change in the concentration of adsorbed oxygen. Oxygen ions adsorb onto the material's surface, removing electrons from the bulk and creating a potential barrier that limits electron movement and conductivity. When reactive gases combine with this oxygen, the height of the barrier is reduced, increasing conductivity. This change in conductivity is directly related to the amount of a specific gas present in the environment, resulting in a quantitative determination of gas presence and concentration.
Unfortunately these detectors not only respond to the presence of gases resulting from scorch or fire, but also various other substances, e.g. vapors released from volatile cleaning substances. This has the consequence that either the detector often generates false alarms, or that a high detection threshold has to be set to prevent this.

SUMMARY OF THE INVENTION

It is a purpose of the present invention to provide an improved detector and a method for detecting scorch.
According to an aspect of the present invention a detector for providing an output signal indicative for the presence of scorch in an environment comprises:

a first and a second sensor for sensing the presence of gaseous substances based on a reversible chemical reaction between a metal-oxide component of the sensor and said substances that results in an observable change in an electrical property of said component, wherein the metal-oxide gas sensitive component of the first gas sensor is uncatalysed and the metal-oxide gas sensitive component of the second gas sensor is catalysed.

The detector further comprises a signal processor that provides an output signal as a function of a first sense signal indicative for the physical parameter of the first sensor and of a second sense signal indicative for the physical parameter of the second sensor.
It has been recognized by the inventor that the uncatalyzed sensor has a relatively high sensitivity for gases released during scorch processes as compared to the catalyzed sensor. This is surprising in view of the fact that in the prior art a sensor is catalyzed to improve the sensitivity of the sensor. The output signal provided by the signal processor as a function of the catalyzed and the uncatalyzed sensor provide clearly discriminates gases resulting from scorch amongst other gases that may be released during normal circumstances. In this way, the detector can provide an early warning signal. This warning signal may alert a responsible person to remove the possible cause of fire at an early stage, e.g. by switching of a malfunctioning electric device. Alternatively the signal may automatically switch off a power supply. As the cause of fire is detected in an early stage, the coming into existence of a fire can be prevented. Therewith also the necessity is prevented to use extinguishing means. Although the detector is sensitive to detect already the presence of scorch, it may also be used to detect a fire, as this will also release scorch gases.
The signal processor may be implemented in dedicated hardware, but may alternatively be implemented in software on a programmable processor, or be implemented on a reconfigurable processor, e.g. FPGA, or as a combination thereof.
A facility is understood to be a hardware and/or a software portion of said signal processor that carries out a task.
An embodiment of the detector is characterized in that the signal processor has a facility for providing an indication signal that has a correlation with the second sense signal that is opposite to a correlation of the output signal with the first sense signal. This facility may be realized in various ways. For example, the facility may obtain the indication signal by a subtraction of the second signal from the first signal. Alternatively the indication signal may be obtained by a division of the first signal by the second signal. In a further alternative embodiment the indication signal is computed from the arctangent of the ratio of the first and the second signal.

In an embodiment the signal processor comprises a second facility for determining an indication signal that is positively correlated with both the first and the second sense signal. This facility may for example compute the sum or the product of the signals.

Normally the atmosphere may show gradual variations in composition by natural causes. These may influence the measured sense signals. Such variations may be suppressed by strictly isolating the environment to be guarded. If this is difficult in practice, for example because personnel regularly has to enter the room an embodiment of the detector is preferred that comprises a filter for blocking relatively slow variations of the sense signals. In this way irrelevant fluctuations in the composition of the atmosphere in the room are filtered out, so that the detector can be used in arbitrary environments. The filter may for example have a low pass cut-off frequency in the range of 0.01 Hz - 0.1 Hz.

In practice further processing of the signals is facilitated in an embodiment that comprises an amplitude limiter for limiting an amplitude of the sense signals.

According to another aspect a method is provided for detecting the occurrence of scorch in an environment, the method comprising:

- observing a first change of an electrical property resulting from a reversible uncatalyzed chemical reaction between a first metal-oxide component and gaseous substances in said environment,
- observing a second change of an electrical property resulting from a reversible catalyzed chemical reaction between a first metal-oxide component and the gaseous substances in said environment,
- providing an output signal on the basis of a combination of said observations.

BRIEF DESCRIPTION OF THE DRAWINGS

These and other aspects are described in more detail with reference to the drawings. Therein

Figure 1 shows schematically shows a layout of a detector according to the invention,
Figure 2 shows the detector according to Figure 1 in more detail,
Figure 3 shows measurement values obtained from the sensors in the detector according to Figure 1 and 2,
Figure 4 shows the filtered and processed sensor values,
Figure 5 shows the result of the calculation (after chopping peak filter values),
Figure 6 schematically shows a first application of the detector,
Figure 7 schematically shows a second application of the detector.

DETAILED DESCRIPTION OF EMBODIMENTS

In the following detailed description numerous specific details are set forth in order to provide a thorough understanding of the present invention. However, it will be understood by one skilled in the art that the present invention may be practiced without these specific details. In other instances, well known methods, procedures, and components have not been described in detail so as not to obscure aspects of the present invention.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

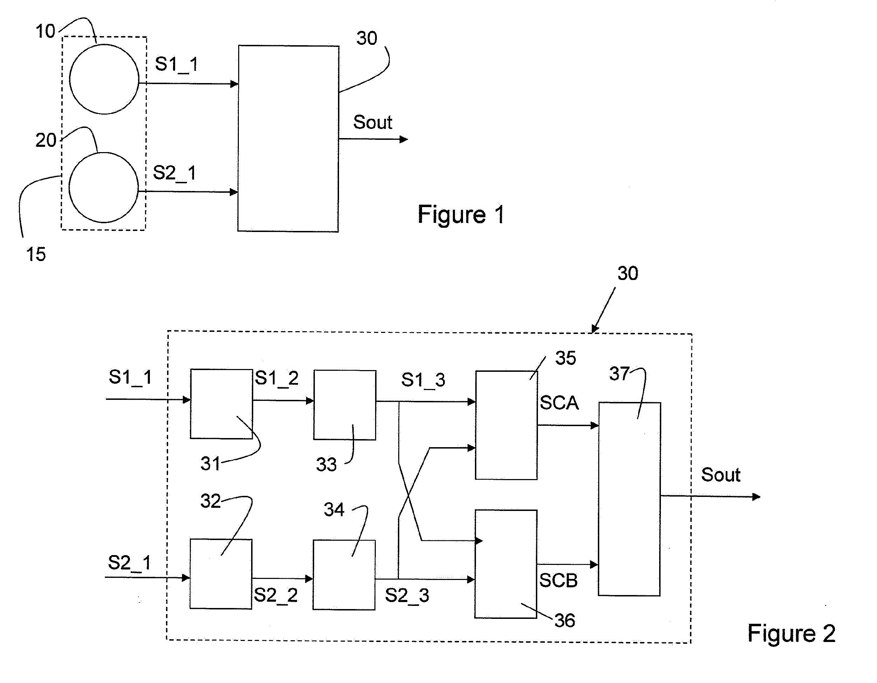

Figure 1 schematically shows a detector for providing an output signal Sout. The output signal Sout is indicative for the presence of scorch in an environment in which the detector is arranged. The detector comprises a first and a second sensor 10, 20 as well as a signal processor 30.

The first and the second sensor 10, 20 sense the presence of gaseous substances based on a reversible chemical reaction between a metal-oxide component of the sensor and said substances that results in an observable change in an electrical property of said component. The metal-oxide gas sensitive component of the first gas sensor 10 is uncatalyzed and the metal-oxide gas sensitive component of the second gas sensor 20 is catalyzed. In this embodiment the metal-oxide is $SnO_2$, but another metal-oxide, such as $WO_3$, $Ti_2O3$, or ZnO may be used instead. The catalyst used in the second gas sensor is Pd. An alternative catalyst is for example Pt.

The signal processor 30 provides an output signal as a function of a first sense signal S1_1 indicative for the physical parameter of the first sensor 10 and of a second sense signal S2_1 indicative for the physical parameter of the second sensor 20.

In the embodiment shown, first and the second sensor are semiconductor sensors on a micro-hotplate where chemical reactions occur of the traces to be detected. Such detector exploits the variation of electrical resistance of the sensor while, at a certain heating temperature, redox reaction take place on the surface of the sensor. Such hotplate technology is very sensitive to variations of the temperature and therefore preferably, detection is provided of the traces at a prefixed temperature. In particular, the heater resistance is temperature dependent, which implies that current adjustments may be provided to provide a stable temperature. This can be done by a balancing circuit which balances the heat resistor to a predefined resistor value.

US patent No 4,847,783 discloses a balancing circuit comprising an adjustable resistor for tuning the heater element to a predefined resistor value.

In the embodiment shown schematically in Figure 1, the sensors 10, 20 are arranged at a common substrate 15. In this way the energy consumption is substantially lower than would be the case when the sensors were arranged at separate substrates.

Although the embodiment shown only comprises two sensors, an alternative embodiment may include additional sensors.

The signal processor 30 is shown in more detail in Figure 2. As can be seen the detector comprises a filter 31, 32 for blocking relatively slow variations in each of the sense signals S1_1, S2_1, resulting in filtered versions S1_2, S2_2 of the sense signals.

Additionally, the signal processor comprises an amplitude limiter 33, 34 for limiting an amplitude of the sense signals. In this case the amplitude limiter limits the amplitude of the sense signals S1_1, S2_1 after they are filtered by the filters 31, 32. The amplitude limited, filtered sense signals are denoted as preprocessed sense signals S1_3, S2_3.

Further processing is based on these preprocessed sense signals S1_3, S2_3. To that end the signal processor is provided with a first facility 35 for determining an indication signal SCA that is correlated to the second sense signal S2_1 in a sense opposite to which the indication SCA is correlated with the first sense signal S1_1.

Examples in which such an indication signal SCA may be obtained are:

$$SCA = S1\_3 - S2\_3 \qquad (1a)$$

$$SCA = \frac{S1\_3}{S2\_3}, \text{ or} \qquad (1b)$$

$$SCA = (\arctan(\frac{S1\_3}{S2\_3}))^p \qquad (1c)$$

with, e.g. 1 < p < 3

The signal processor also comprises a second facility 36 for determining an indication signal SCB that is positively correlated with both the first and the second sense signal S1_1, S2_1.

By way of example, the second facility 36 may carry out the following function

$$SCB = S1\_3 + S2\_3, \text{ or} \qquad (2a)$$

$$SCB = S1\_3 * S2\_3 \qquad (2b)$$

Facility 37 calculates the output signal Sout from the indication signals SCA, SCB,
**[0035]** For example by the function

$$S_{out} = SCA * SCB \text{, or} \qquad (3a)$$

$$S_{out} = SCA + SCB \qquad (3b)$$

Various combinations are possible that result in an improved sensitivity for gases related to scorch. For example, the indication signal SCA may be used as the output signal Sout of the detector. Also it is not necessary that the indication signals are computed from the preprocessed sense signals S1_3, S2_3. Alternatively, the calculation of the indication signal may be based on the raw sense signals S1_1, S2_1 instead, or on the filtered input signals S1_2, S2_2. Alternatively the calculation could be based on amplitude limited, but unfiltered sense signals.
The best results were obtained by a combination of the functions (1c), (2a) and (3a), with p = 2 in (1c).
In that case, the output signal Sout is given by:

$$S_{out} = (S1\_3 + S2\_3) * (\arctan(\frac{S1\_3}{S2\_3}))^2 \qquad (4)$$

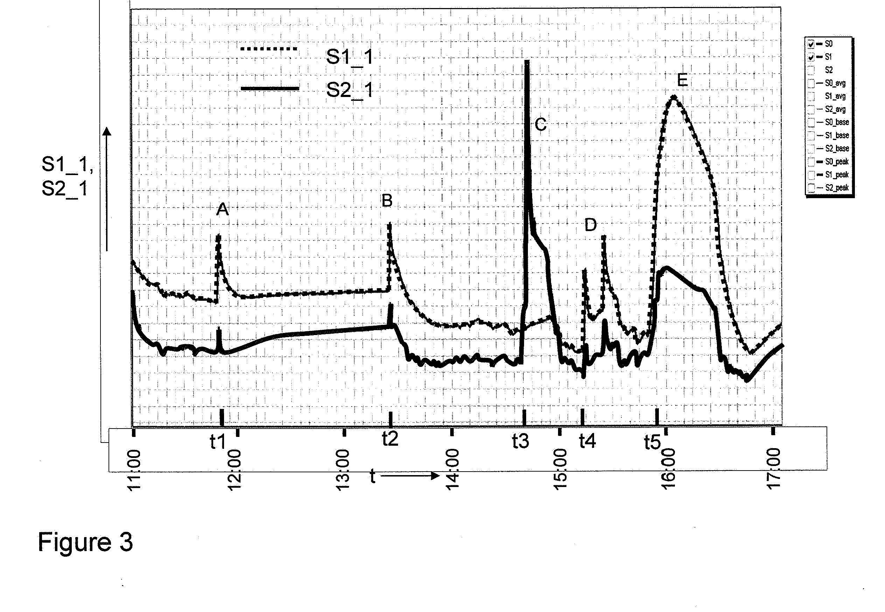

Experiments with embodiments of the detector are illustrated in Figure 3 to 5. Therein various signals are shown as a function of the time of the day.
Figure 3 shows the raw sense signals S1_1, S2_1. The raw sense signal S1_1 obtained from the uncatalyzed sensor 10 is indicated by a dotted line. The raw sense signal S2_1 obtained from the catalyzed sensor 20 is indicated by a solid line. The detector with the sensors 10, 20 was arranged in an environment enclosed by a room of 3.5 x 5 m, with a height of 2.6 m. The response of the sensor is measured to the following events (A, B, C, D, E), at points in time t1, t2, t3, t4 and t5 respectively:

t1    Scorching electronics circuit board#1(A)
t2    Scorching electronics circuit board #2 (B)
t3    Ethanol (C)
t4    Burned resistors (charred, 2 resistors in series) (D)
t5    Cigarette (5 puffs in room) (E)

Events like A, B and D are likely to occur in a computer room. It is attractive if action can be taken to prevent that these events result in a fire, e.g. by switching off the power, and replacing the malfunctioning component, instead of by having to extinguish the fire, and therewith causing damage to the computing apparatus.
Between these events the room was ventilated by opening the windows. From the signal S1_1 shown in this Figure it is clear that the catalyzed sensor has a relatively modest response to scorch related atmospheric changes (A, B, D, E), and a strong response to the presence of volatile organic substances (C). On the contrary, it can be seen that the uncatalyzed sensor 10 is relatively sensitive to atmospheric changes related to scorch (A, B, D, E), but relatively insensitive to volatile organic substances (C). Nevertheless, a detection based on the raw detection signal S1_1 from the uncatalyzed sensor alone, would require a relatively high detection threshold, to rule out false alarms by fluctuations in the signal due to other causes.

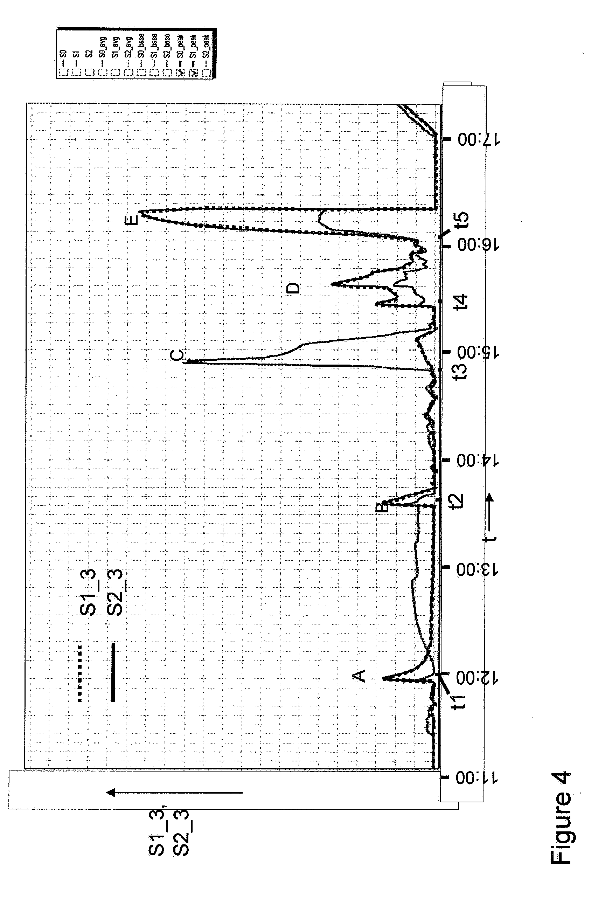

Figure 4 shows the preprocessed signals S1_3, S2_3 as a function of time. It can be seen therein that an improved signal to noise ratio is obtained. In particular the preprocessed signal S1_3 has a significantly signal to noise ratio than the raw sensor signal S1_1 from the uncatalyzed sensor 10.

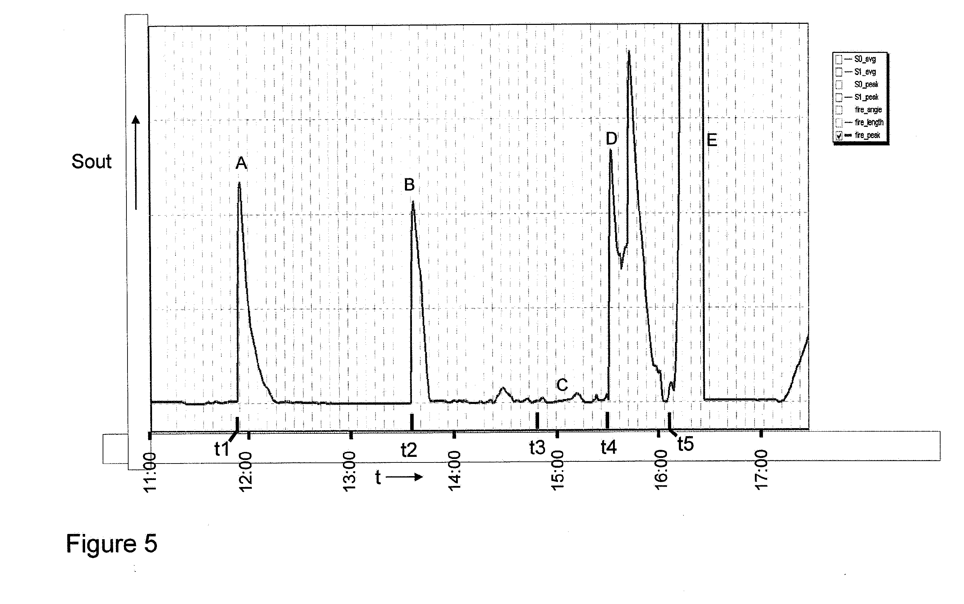

Figure 5 shows the output signal Sout, obtained with function (4) from the preprocessed sense signals S1_3, S2_3. It can be seen that the output signal Sout clearly discriminates between events related to scorch, which could eventually result in a fire, and between other events which need no action. As the output signal is highly discriminatory, the detection level can be set at a relatively low value, so that sufficient time is available to take preventive measures.

The invention may be used in several applications.

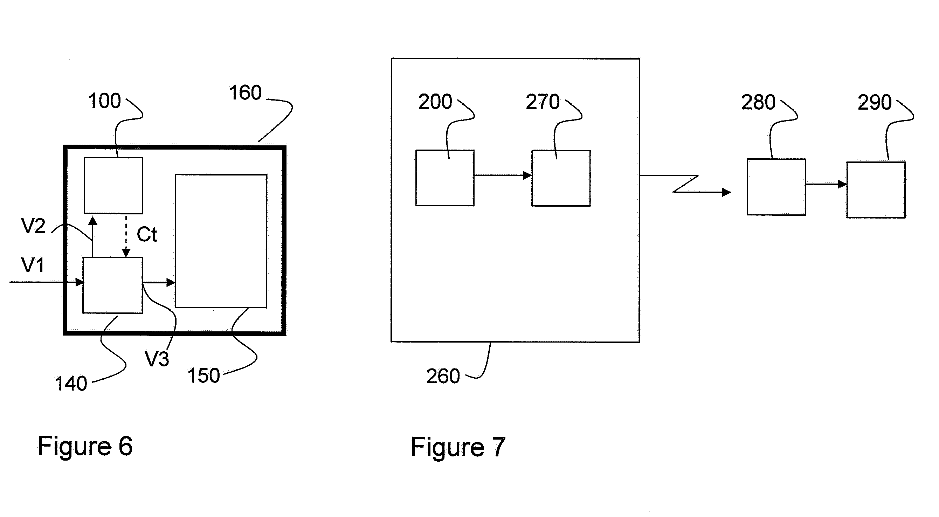

Figure 6 shows a first application. The application comprises an electronic apparatus 150 in a box 160. Furthermore a detector 100 according to the present invention is arranged in the box 160. Both the electronic apparatus 150 and the detector 100 are supplied by a power supply 140. The power supply 140 is for example connected to a mains voltage V1, and supplies a supply voltage V2, V3 to the detector 100 and the electronic apparatus 150 respectively. Once the detector 100 detects an amount of scorch that exceeds a predetermined threshold value it switches of the power supply 140 by a control signal Ct, and therewith prevents that a fire is caused. The electronic apparatus 150 is for example a television set or another consumer electronics product, but can otherwise be a professional product, e.g. a computer system.

Figure 7 shows a second application. The detector 200 is arranged in a room 260, and coupled to a transmitter 270. If scorch is detected a signal is transmitted to a receiver 280 that activates a human communication interface 290 to generate an alert signal, e.g. a visible or an audible signal. The alert enables safety personnel to carry out an inspection locally and take measures. Transmission may take place wireless or by a wired connection. This application is in particularly suitable if an automatic power-down would not be appropriate. Instead, the security personnel may for example replace a malfunctioning component.

In the claims the word "comprising" does not exclude other elements or steps, and the indefinite article "a" or "an" does not exclude a plurality. A single component or other unit or facility may fulfill the functions of several items recited in the claims. The mere fact that certain measures are recited in mutually different claims does not indicate that a combination of these measures cannot be used to advantage. Any reference signs in the claims should not be construed as limiting the scope.

**Claims**

1. A detector for providing an output signal (Sout) indicative for the presence of scorch in an environment, the detector comprising:

   - a first and a second sensor (10, 20) for sensing the presence of gaseous substances based on a reversible chemical reaction between a metal-oxide component of the sensor and said substances that results in an observable change in an electrical property of said component,
   wherein the metal-oxide gas sensitive component of the first gas sensor (10) is uncatalyzed and the metal-oxide gas sensitive component of the second gas sensor (20) is catalyzed,
   - a signal processor (30) that provides the output signal as a function of a first sense signal (S1_1) indicative for the physical parameter of the first sensor (10) and of a second sense signal (S2_1) indicative for the physical parameter of the second sensor (20).

2. A detector according to claim 1, **characterized in that** the signal processor (30) comprises a first facility (35) for determining an indication signal (SCA) that is correlated to the second sense signal (S2_1) in a sense opposite to which the indication (SCA) is correlated with the first sense signal (S1_1).

3. A detector according to claim 2, **characterized in that** the signal processor comprises a second facility (36) for determining an indication signal that is positively correlated with both the first and the second sense signal (S1_1, S2_1).

4. A detector according to claim 2 or 3, comprising a filter (31, 32) for blocking relatively slow variations of the sense signals (S1_1, S2_1).

5. A detector according to claim 2 or 3, comprising an amplitude limiter (33, 34) for limiting an amplitude of the sense signals.

6. A detector according to claim 1, wherein the first and the second sensor (10, 20) are arranged at a common substrate (15).

7. An electronic apparatus (150) with a housing (160) further comprising a power supply (140) and a detector according to one of the claims 1 to 6, wherein the detector (100) upon detection of scorch switches off the power supply (140).

8. A safety system comprising a transmitter (270) coupled to a detector (200) according to one of the claims 1-6 and for transmitting the output signal (Sout) to a receiver (280) coupled to a human communication interface (290) for generating an alert signal.

9. Method for detecting the occurrence of scorch in an environment, the method comprising:

- observing a first change of an electrical property resulting from a reversible uncatalysed chemical reaction between a first metal-oxide component and gaseous substances in said environment,
- observing a second change of an electrical property resulting from a reversible catalysed chemical reaction between a first metal-oxide component and the gaseous substances in said environment,
- providing an output signal on the basis of a combination of said observations.

10. Method according to claim 9, comprising the step of blocking relatively slow variations of the sense signals.

11. Method according to claim 9 or 10, comprising the step of limiting the value of the sense signals within a predetermined range.

EP 2 105 728 A1

Figure 1

Figure 2

Figure 3

Figure 4

Figure 5

Figure 7

Figure 6

**European Patent Office**

**EUROPEAN SEARCH REPORT**

Application Number

EP 08 15 3392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 542 640 A (CLIFFORD PAUL K [US]) 24 September 1985 (1985-09-24) * column 7, line 65 - column 8, line 37; figure 1 * * column 9, line 62 - column 10, line 59 * ----- | 1-11 | INV. G01N27/12 G01N27/16 G01N27/18 G08B17/117 |
| X | EP 0 750 192 A (SUN ELECTRIC UK LTD [GB]) 27 December 1996 (1996-12-27) * column 6, line 17 - line 43 * * column 7, line 3 - line 9 * ----- | 1-11 | |
| A | WO 2007/061294 A (CONSULTATIE IMPLEMENTATIE TECH [NL]; BOS ALBERT [NL]) 31 May 2007 (2007-05-31) * the whole document * ----- | 1-11 | |

TECHNICAL FIELDS
SEARCHED (IPC)

G01N
G08B

The present search report has been drawn up for all claims

| Place of search | Date of completion of the search | Examiner |
|---|---|---|
| Munich | 26 August 2008 | Purdie, Douglas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 3392

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2008

| Patent document cited in search report | | Publication date | Patent family member(s) | | Publication date |
|---|---|---|---|---|---|
| US 4542640 | A | 24-09-1985 | EP | 0161266 A1 | 21-11-1985 |
| | | | JP | 60067850 A | 18-04-1985 |
| | | | WO | 8501351 A1 | 28-03-1985 |
| EP 0750192 | A | 27-12-1996 | GB | 2302591 A | 22-01-1997 |
| | | | US | 5731510 A | 24-03-1998 |
| WO 2007061294 | A | 31-05-2007 | NONE | | |

EPO FORM P0459

**EP 2 105 728 A1**

**REFERENCES CITED IN THE DESCRIPTION**

**Patent documents cited in the description**

- US 4847783 A